# EUROPEAN PATENT APPLICATION

(11) **EP 1 481 778 A1**
(43) Date of publication of application: **01.12.2004**
(21) Application number: 03710239.9
(22) Date of filing: 05.03.2003
(51) Int. Cl.: B27N 3/00, B27N 1/00

(54) **PROCESS FOR PRODUCING BIODEGRADABLE FIBER MOLDING**

(30) Priority: 05.03.2002 JP 2002058140
(71) Applicant: Dainippon Pharmaceutical Co., Ltd., Osaka-shi, Osaka 541-8524 (JP)
(72) Inventor: TANAKA, Kiyokazu, Koga-gun, Shiga 520-3242 (JP)
(74) Representative: Grünecker, Kinkeldey, Stockmair & Schwanhäusser Anwaltssozietät
(86) International application number: PCT/JP2003/002547
(87) International publication number: WO 2003/074242

(57) **Abstract**

Plant fiber powder is mixed with plant binder powder, which is a mixture of starch powder and gummy matter powder. The mixture of the plant fiber powder and the plant binder powder is mixed with water to produce plant fiber molding material. The plant fiber molding material is molded.

## Description

### [TECHNICAL FIELD]

The present invention relates to a method for producing biodegradable fiber material moldings, especially a method comprising steps of mixing plant fiber powder with plant binder powder, adding water to the mixture, and molding the mixture.

### [BACKGROUND ART]

Conventional plastics made of chemically synthesized material are easy to mold, durable, capable of mass production and have other various advantages. However, they resist degradation in soil when disposed of in soil, and are liable to generate harmful materials such as dioxin, etc. when they are burnt. Therefore, conventional plastics made of chemically synthesized material have caused various social problems. Nowadays, it is desired that industrial wastes be ones that are harmless to nature, such as ones degraded by bacteria in soil, and that do not readily generate harmful materials such as dioxin, etc. when they are burnt. Biodegradable plastic manufacturing technologies can meet this expectation.

Biodegradable plastics mainly comprising hydrocolloid of polysaccharide, such as starch and synthetic plastic (Kagaku to Seibutsu Vol.33, No.3, pages 159 to 166, 1995), (Bioscience & Industry Vol.52, No.10, pages 759 to 800, 1994), cellulose and chitosan (Chemistry and Chemical Industry Vol.43, No.11, pages 85 to 87, 1990) are known.

Japanese Patent Laid-Open Publication No.504950/1999 proposes industrial products comprising cell matrix bound by starch and reinforced by fiber. The cell matrix comprises starch binder, mineral aggregate filler, and fibers substantially uniformly dispersed in the cell matrix bound by starch. The mean aspect ratio of the fibers is about 25 to 1 or larger. Concentration of the mineral aggregate filler relative to the cell matrix bound by starch is 20 weight % or larger. The thickness of the cell matrix bound by starch is about 1cm or smaller. The cell matrix bound by starch degrades when it is submerged in water for a long time.

Japanese Patent Laid-Open Publication No.342354/2001 proposes a method for producing moldings comprising steps of mixing at least konjak powder, plant fiber powder and water, kneading the mixture, pouring the kneaded mixture into a desirable mold, and hot press forming the mixture.

### [DISCLOSURE OF INVENTION]

Biodegradable plastics mainly made of hydrocolloid of polysaccharide have a problem in that they are far more expensive to produce than plastics made of chemically synthesized material. The industrial products proposed in Japanese Patent Laid-Open Publication No.504950/1999 have a problem in that they are not suitable for mass production by injection molding because the fibers, one of the raw materials of the products, are too large in size and the quantity of the water mixed with the raw materials is too large. The method for producing biodegradable fiber material moldings proposed in Japanese Patent Laid-Open Publication No.342354/2001 has a problem in that it is not suitable for mass production because it is a method utilizing hot press forming.

An object of the present invention is to provide a method for producing biodegradable fiber material moldings which can inexpensively mass-produce biodegradable fiber material moldings.

In accordance with the present invention, there is provided a method for producing biodegradable fiber material moldings comprising steps of mixing plant fiber powder with plant binder powder, which is a mixture of starch powder and gummy matter powder, mixing the mixture of the plant fiber powder and the plant binder powder with water to form plant fiber molding material, and molding the plant fiber molding material.

When plant binder powder made of a mixture of starch powder and gummy matter powder is used, it becomes possible to obtain molding material suitably fluidized to fill up a mold when it is injected in an injection molding process or injection press molding process having the same injection step as the injection molding process, while using less water than that used when plant binder made of only starch powder is used. Biodegradable fiber material moldings made of the aforementioned molding material can be dried rapidly after they are taken out the molds because they contain little water. Therefore, the method of the present invention can mass-produce biodegradable fiber material moldings inexpensively.

The plant fiber material moldings produced by the method of the present invention do not contain synthetic resin at all and are biodegraded in the natural environment to disperse in soil, thereby becoming a component of the soil. Therefore, the plant fiber material moldings produced by the method of the present invention can be disposed of as ordinary wastes without violating the container recycle law.

The ratio of gummy matter powder to the total weight of plant binder powder is desirably equal to or smaller than 15%. If the ratio of gummy matter powder exceeds 15 weight %, the releasability of moldings when they are taken out from molds is degraded.

In accordance with the present invention, there is provided a method for producing biodegradable fiber material moldings comprising steps of mixing 2 to 17 weight parts of plant fiber powder with 1 weight part of plant binder powder, mixing 3 to 9 weight parts of the mixture of the plant fiber powder and the plant binder powder with 1 weight part of water to form plant fiber molding material, and molding the plant fiber molding material.

When 2 to 17 weight parts of plant fiber powder is mixed with 1 weight part of plant binder powder, and 3 to 9 weight parts of the mixture of the plant fiber powder and the plant binder powder is mixed with 1 weight part of water, it becomes possible to obtain molding material suitably fluidized to fill up a mold when it is injected in an injection molding process or injection press molding process having the same injection step as the injection molding process. Biodegradable fiber material moldings made of the aforementioned molding material containing little water can be dried rapidly after they are taken out the molds because they contain little water. Therefore, the method of the present invention can mass-produce biodegradable fiber material moldings inexpensively.

It is possible to mold the aforementioned molding material, thereby mass-producing biodegradable fiber material moldings inexpensively.

The plant fiber material moldings produced by the method of the present invention do not contain synthetic resin at all and are biodegraded in the natural environment to disperse in soil, thereby becoming a component of the soil. Therefore, the plant fiber material moldings produced by the method of the present invention can be disposed of as ordinary wastes without violating the container recycle law.

If less than 2 weight parts of plant fiber powder is mixed with 1 weight part of plant binder powder, the moldings tightly adhere to the molds and it becomes hard to release them from the molds. If more than 7 weight parts of plant fiber powder is mixed with 1 weight part of plant binder powder, the strength of the moldings decreases. If less than 3 weight parts of a mixture of plant fiber powder and plant binder powder is mixed with 1 weight part of water, the strength of the moldings decreases and it becomes hard to smoothly release them from the molds. If more than 9 weight parts of a mixture of plant fiber powder and plant binder powder is mixed with 1 weight part of water, the flowability of the molding material decreases and it can no more fill up the molds.

The plant fiber powder may be made of nonpoisonous plant material such as wood, grass, leaf, chaff, rice bran, fruit skin, coffee grounds, etc. or a mixture of nonpoisonous plant materials.

The plant binder powder may be nonpoisonous starch, gummy matter, or a mixture thereof.

Natural colorant, oil-soluble matter, etc. can be added to the molding material made of the mixture of plant fiber powder, plant binder powder and water.

The biodegradable fiber material moldings produced by the method of the present invention are packing trays, tableware such as chopsticks, bowls, etc., containers for raw foods, lighting fittings, ornaments, carpets, toys, furniture, footgear, ash trays, flowerpots, stationery, sporting goods, car interior goods, building materials, etc.

In accordance with a preferred embodiment of the present invention, the plant binder powder is starch powder.

Starch powder is suitable to produce plant fiber material moldings in large quantities because it can be obtained inexpensively in large quantities.

The starch powder may be any kind of nonpoisonous starch powder such as wheat flour starch, potato starch, cornstarch, waxy cornstarch, high-amylose starch, sago-starch, tapioca starch, etc. The starch powder may be a mixture of aforementioned nonpoisonous starch powders.

In accordance with a preferred embodiment of the present invention, the plant binder powder is a mixture of starch powder and gummy matter powder.

When plant binder powder made of a mixture of starch powder and gummy matter powder is used, it becomes possible to obtain molding material suitably fluidized to fill up a mold when it is injected in an injection molding process or injection press molding process having the same injection step as the injection molding process, while using less water than that used when plant binder made of only starch powder is used. The biodegradable fiber material moldings made of the aforementioned molding material can be dried rapidly after they are taken out the molds because they contain little water. Therefore, the method of the present invention can mass-produce biodegradable fiber material moldings inexpensively. The ratio of gummy matter powder to the total weight of plant binder powder is desirably equal to or smaller than 15%. If the ratio of gummy matter powder exceeds 15 weight %, the releasability of moldings when they are taken out from molds is degraded.

In accordance with a preferred embodiment of the present invention, the gummy matter is water soluble polysaccharide.

Gummy matter, specifically water soluble gummy matter came from water soluble polysaccharide, promotes gelation of starch to promote fluidization of biodegradable fiber molding material, thereby enhancing the workability of the molding material and reinforcing the main structures of the moldings made of plant fiber powder.

In accordance with a preferred embodiment of the present invention, the water soluble polysaccharide is one or more selected from the group consisting of Xanthan gum, Tamarind seed gum, Gellan gum, Carrageenan, Pullulan, Guar gum, Locust bean gum, Tara gum, Pectin, Alginic acid, and Agar.

Water soluble polysaccharide such as Xanthan gum, Tamarind seed gum, Gellan gum, Carrageenan, Pullulan, Guar gum, Locust bean gum, Tara gum, Pectin, Alginic acid, and Agar can be used. Anyone of them can be used alone. A mixture of two or more of them also can be used.

In accordance with a preferred embodiment of the present invention, the water soluble polysaccharide is one or two water soluble polysaccharides selected from the group consisting of Xanthan gum and Tamarind seed gum.

When Xanthan gum or Tamarind seed gum or the mixture thereof is used as water soluble polysaccharide, it becomes possible to obtain molding material exhibiting specifically good flowability at the injection stage and specifically good releasability at the pulling out mold stage. When a mixture of Xanthan gum and Tamarind seed gum is used, the ratio of the Tamarind seed gum to the total weight of the water soluble polysaccharide is desirably 70% or less.

In accordance with a preferred embodiment of the present invention, the particle size of the plant fiber powder is 60 to 200 mesh.

When the particle size of plant fiber powder is 60 mesh or finer, expansion explosion of the plant fiber powder at the mold opening stage of the molding operation is prevented. On the other hand, crushing plant fiber into plant fiber powder with particle size finer than 200 mesh requires much equipment and considerably more labor, and makes it difficult to achieve mass production of the moldings.

In accordance with a preferred embodiment of the present invention, the water content of the plant fiber powder is 4 to 20 weight %.

A plant fiber powder of 60 to 200 mesh particle size can be classified efficiently from plant fiber powder by an ascending air current and a cyclone dust collector. A plant fiber powder of a water content of 20 weight % or less is suitable for the classification by an ascending air current and a cyclone dust collector. A plant fiber powder of a water content of less than 4 weight % requires much equipment and considerably more labor to obtain, and makes it difficult to achieve mass production of the moldings.

In accordance with a preferred embodiment of the present invention, a plant fiber material with a water content of 40 to 50 weight % is washed and sterilized by 150 to 180°C steam, pressurized and dehydrated, heated and dried, and impacted on and crushed to obtain a plant fiber powder with a water content of 4 to 10 weight %, whereafter the plant fiber powder is dispersed into an ascendant air current to be classified, and led into a cyclone dust collector to be classified, in an environment excluded from outside air, to obtain plant fiber powder of 60 to 200 mesh particle size and a water content of 4 to 10 weight %.

When the plant fiber material is washed and sterilized by 150 to 180°C steam, enzymatic action is stopped and the natural color of the plant fiber material is maintained. Thus, moldings which are sanitary and maintain the natural color of the plant fiber material are produced.

The water content of naturally dried plant fiber material is 40 to 50 weight %. From the viewpoint of reducing drying time and saving energy, the plant fiber material with a water content of 40 to 50 weight % is desirably pressurized and dehydrated, and then heated and dried. It takes a lot of energy and a long time to directly pressurize and dehydrate the plant fiber material with a water content of 40 to 50 weight %. When the plant fiber material with a water content of 40 to 50 weight % is washed and sterilized by 150 to 180°C steam to increase the water content to 60 to 75 weight %, it can be pressurized and dehydrated to a water content of about 35 weight % with low energy consumption and in a short time. It takes a long time to heat and dry plant fiber material with a water content of 40 weight % or more, while plant fiber material dehydrated to a water content of about 35 weight % can be heated and dried to a water content of about 10 weight % in a short time. It takes a long time to further dehydrate the plant fiber material already dried to a water content of about 10 weight % by heating and drying. When the plant fiber material already dried to a water content of about 10 weight % is impacted on and crushed to be atomized and heated, it can be dehydrated to a water content of 4 to 10 weight % in a short time.

When the plant fiber powder with a water content of 4 to 10 weight % obtained by the aforementioned crushing process is dispersed into an ascendant air current to be classified, and then led into a cyclone dust collector to be classified, thus being classified in two steps, with the speed of the ascending air current, the ascending distance, the specifications of the cyclone dust collector, etc. being set at suitable conditions, a plant fiber powder with 60 to 200 mesh particle size is obtained efficiently. When the plant fiber powder with a water content of 4 to 10 weight % is classified in an environment excluded from outside air, it is protected from moisture absorption in the classification process.

In accordance with a preferred embodiment of the present invention, plant fiber material with a water content of 40 to 50 weight % is washed and sterilized by 150 to 180°C steam, pressurized and dehydrated, and impacted on and crushed to obtain a plant fiber powder with a water content of 10 to 20 weight %, whereafter the plant fiber powder is dispersed into an ascending air current to be classified, and led into a cyclone dust collector to be classified, in an environment excluded from outside air, thereby obtaining a plant fiber powder with 60 to 200 mesh particle size and a water content of 10 to 20 weight %.

When the plant fiber material with a water content of about 35 weight % obtained by the processes of 150 to 180°C steam washing and sterilization, and pressurization and dehydration is impacted on and crushed to be atomized and heated, it can be dehydrated to a water content of 10 to 20 weight % in a short time.

When the plant fiber powder with a water content of 10 to 20 weight % obtained by the aforementioned crushing process is dispersed into an ascendant air current to be classified, and then led into a cyclone dust collector to be classified, thus being classified in two steps, with the speed of the ascending current, the ascending distance, the specifications of the cyclone dust collector, etc. being set at suitable conditions, a plant fiber powder with 60 to 200 mesh particle size is obtained efficiently. When plant fiber powder with a water content of 10 to 20 weight % is classified in an environment excluded from outside air, it is protected from moisture absorption in the classification process.

In accordance with a preferred embodiment of the present invention, a plant fiber material with a water content of 40 to 50 weight % is impacted on and crushed to obtain a plant fiber powder with a water content of 10 to 20 weight %, whereafter the plant fiber powder is dispersed into an ascending air current to be classified, and led into a cyclone dust collector to be classified, in an environment excluded from outside air, thereby obtaining a plant fiber powder with a water content of 10 to 20 weight % and 60 to 200 mesh particle size.

When naturally dried plant fiber material with a water content of 40 to 50 weight % is impacted on and crushed to be atomized and heated, it can be dehydrated to a water content of 10 to 20 weight % in a short time.

When the plant fiber powder with a water content of 10 to 20 weight % obtained by the aforementioned crushing process is dispersed into an ascendant air current to be classified, and then led into a cyclone dust collector to be classified, thus being classified in two steps, with the speed of the ascending current, the ascending distance, the specifications of the cyclone dust collector, etc. being set at suitable conditions, a plant fiber powder with 60 to 200 mesh particle size is obtained efficiently. When a plant fiber powder with a water content of 10 to 20 weight % is classified in an environment excluded from outside air, it is protected from moisture absorption in the classification process.

In accordance with a preferred embodiment of the present invention, a plant fiber material with a water content of 40 to 50 weight % is ground down to obtain a plant fiber powder with 60 to 200 mesh particle size and a water content of 4 to 20 weight %.

The plant fiber material with a water content of 40 to 50 weight % is led into a narrow space between a blade and a mesh in an air flow, while the blade is moved relative to and in parallel with the mesh. The plant fiber material is sheared by the blade, forced into the pores of the mesh to be ground down, and sheared by the edges of the mesh. The aforementioned shearing and grinding down is repeated, while the size of the pores of the mesh are reduced successively, to heat and dry the particles of the plant fiber material, as well as reduce the size of the particles of the plant fiber material. Thus, a plant fiber powder with 60 to 200 mesh particle size and a water content of 4 to 20 weight % is obtained.

In accordance with a preferred embodiment of the present invention, a plant fiber molding material is molded at a temperature of 60 to 130°C.

When the molding material is molded at the temperature lower than 60°C, the starch is not gelatinized so that the plant fiber molding material lacks flowability, thereby causing lack of filling. In the worst case, the plant fiber molding material is not discharged from the injection nozzle of the injection molding machine. When the molding material is molded at a temperature higher than 130°C, the volume of steam blown out the nozzle of the injection molding machine increases to cause filling up of end portions of the cavity of the mold with gas, thereby causing lack of filling.

The molding temperature of 60 to 130°C has another advantage of conserving the energy necessary for the production of the moldings.

In accordance with a preferred embodiment of the present invention, the plant fiber molding material is brought to the final molding process without passing through a pre-forming process.

The plant fiber molding material in accordance with the present invention is imparted with suitable viscosity and flowability. Therefore, it does not need a pre-forming process such as granulation for enhancing ease of carriage by the screw of the injection molding machine because it can be reliably carried by the screw. Therefore, the plant fiber molding material in accordance with the present invention, which is a powder, can be brought to the final molding process by an injection molding machine as it is.

In accordance with the present invention, there is provided biodegradable fiber molding material comprising plant fiber powder, plant binder powder, which is a mixture of starch powder and gummy matter powder, and water, wherein the plant fiber powder, the plant binder powder and the water are mixed with each other.

In accordance with the present invention, there is provided biodegradable fiber molding material comprising plant fiber powder, plant binder powder and water, wherein the plant fiber powder, the plant binder powder and the water are mixed with each other, and wherein the weight of the plant binder powder is 1/7 to 1/2 of the weight of the plant fiber powder, and the weight of the mixed water is 10 to 25 % of the total weight of the mixture of the plant fiber powder, the plant binder powder and the water.

Biodegradable fiber material moldings made of the biodegradable plant fiber molding material in accordance with the present invention contain little water and can be dried rapidly after they are taken out the molds because the biodegradable plant fiber molding material in accordance with the present invention contains little water. Therefore, biodegradable fiber material moldings can be mass-produced inexpensively by the use of the molding material in accordance with the present invention. The biodegradable plant fiber molding material in accordance with the present invention can be suitably used for injection molding or injection press molding having the same injection step as the injection molding. The biodegradable plant fiber molding material in accordance with the present invention can also be suitably used for extrusion molding, transfer molding or hot press molding.

### [BRIEF DESCRIPTION OF DRAWINGS]

In the drawings:
Figure 1 is a flow diagram of the method for producing biodegradable fiber material moldings in accordance with a preferred embodiment of the present invention.
Figure 2 is a cross sectional view of the hopper used in the method for producing biodegradable fiber material moldings in accordance with a preferred embodiment of the present invention.
Figure 3 is a cross sectional view of the steam washer used in the method for producing biodegradable fiber material moldings in accordance with a preferred embodiment of the present invention, wherein (a) is a side sectional view and (b) is a front sectional view.
Figure 4 is a cross sectional view of the wringer used in the method for producing biodegradable fiber material moldings in accordance with a preferred embodiment of the present invention.
Figure 5 is a cross sectional view of the drier used in the method for producing biodegradable fiber material moldings in accordance with a preferred embodiment of the present invention, wherein (a) is a side sectional view and (b) is a front sectional view.
Figure 6 is a cross sectional view of the crusher used in the method for producing biodegradable fiber material moldings in accordance with a preferred embodiment of the present invention.
Figure 7 is a structural view of the classifier used in the method for producing biodegradable fiber material moldings in accordance with a preferred embodiment of the present invention.
Figure 8 is a perspective view of a modification of the crusher used in the method for producing biodegradable fiber material moldings in accordance with a preferred embodiment of the present invention.

### [BEST MODE FOR CARRYING OUT THE INVENTION]

A method for producing biodegradable fiber material moldings in accordance with a preferred embodiment of the present invention will be described.

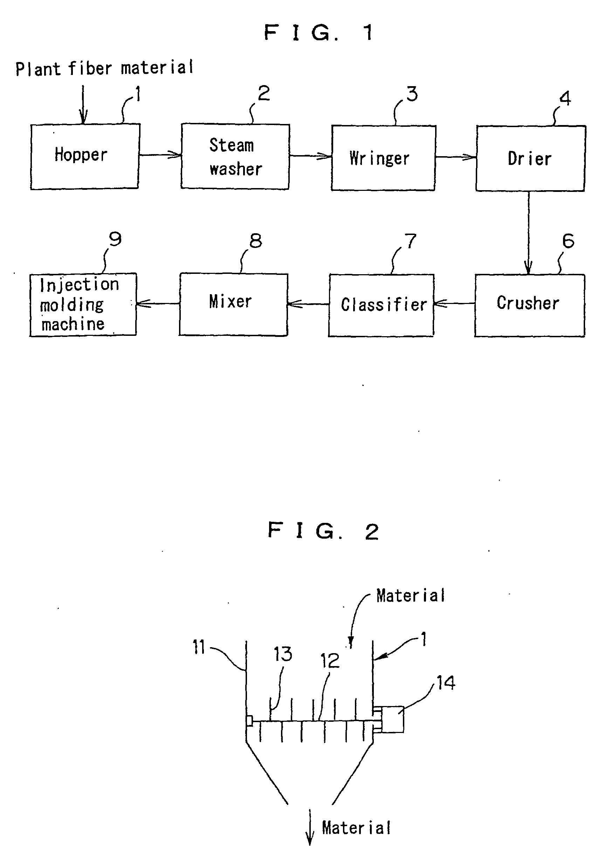

As shown in Figure 1, nonpoisonous plant fiber material such as wood, grass, rice bran, fruit skin, etc. which has been naturally dried to reduce its water content to 40 to 50 weight % is put in a hopper 1. As shown in Figure 2, the hopper 1 is provided with a body 11 and a shaft 12 horizontally extending in the body 11. The shaft 12 is provided with numerous agitating arms 13. The shaft 12 is rotated by a motor 14. The plant fiber material is loosened by the agitating arms 13 rotating together with the shaft 12 to fall off the hopper 1 and be carried to a steam washer 2 by a belt conveyer not shown in the Figures.

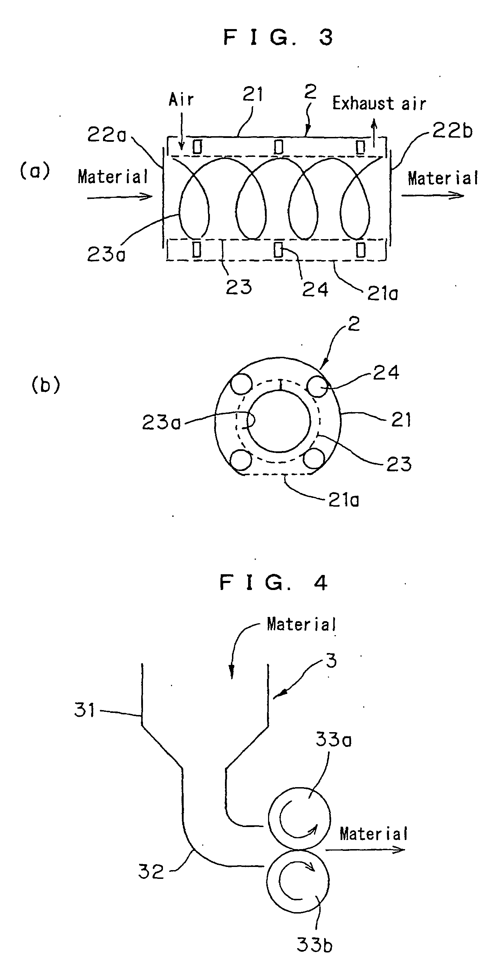

As shown in Figure 3, the steam washer 2 is provided with a cylindrical outer shell 21 extending horizontally. The cylindrical outer shell 21 is made of mesh at its lower portion 21a. The cylindrical outer shell 21 is provided with opening doors 22a and 22b at its opposite ends. A cylindrical inner shell 23 made of mesh is disposed in the cylindrical outer shell 21. The cylindrical inner shell 23 is provided with a spiral protrusion 23a on its inner surface. A plurality of rollers 24 are disposed between the cylindrical outer shell 21 and the cylindrical inner shell 23 to support the inner shell. Specific ones among the rollers 24 are driving rollers driven by a motor not shown in the Figures. The rollers 24 other than the specific ones are driven rollers.

The opening door 22a of the steam washer 2 opens, and the plant fiber material carried by the belt conveyer not shown in the Figures is brought into the cylindrical inner shell 23. The opening door 22a is closed, the specific driving rollers among the rollers 24 for supporting the inner shell rotate, and the cylindrical inner shell 23 rotates. The spiral protrusion 23a rotates to carry the plant fiber material to the opening door 22b.

Steam at a temperature of 150 to 180°C is supplied into the cylindrical outer shell 21 through an opening provided for the cylindrical outer shell 21 at its portion near the opening door 22a. The steam is discharged from the cylindrical outer shell 21 through an opening provided for the cylindrical outer shell 21 at its portion near the opening door 22b. The steam flows into the cylindrical inner shell 23 made of mesh, washes and sterilizes the plant fiber material being carried, and increases the water content of the plant fiber material to 60 to 75 weight %. When the plant fiber material is heated by the steam, enzymatic action is stopped and the natural color of the plant fiber material is maintained.

Stones, sand and dust taken off the plant fiber material and water dropping off the fiber plant material are discharged from the steam washer 2 through the mesh of the cylindrical inner shell 23 and the mesh of the lower portion 21a of the cylindrical outer shell.

When the plant fiber material comes near the opening door 22b, the opening door 22b opens to discharge the washed, sterilized and humidified plant fiber material from the steam washer 2. Then, the plant fiber material is carried to a wringer 3 on a belt conveyer not shown in the Figures.

As shown in Figure 4, the wringer 3 is provided with a hopper 31, an elbow 32 connected to the lower end of the hopper 31, and an upper roller 33a and a lower roller 33b disposed adjacent the discharge port of the hopper 32. The lower roller 33b is a driving roller driven by a motor not shown in the Figures, and the upper roller 33a is a driven roller. The upper roller 33a is moved up and down by a driving machine not shown in the Figures.

The plant fiber material carried by the belt conveyer not shown in the Figures is put in the hopper 31 of the wringer 3, passed through the elbow 32, and pulled into the space between the upper roller 33a and the lower roller 33b rotating at high speed to be pressurized and dehydrated. The plant fiber material with its water content increased to 60 to 75 weight % is passed through the space between the pair of rollers to be instantaneously pressurized and dehydrated to a water content of about 35 weight %. The dehydrated plant fiber material is discharged from the wringer 3. Then, the plant fiber material is carried to a drier 4 on a belt conveyer not shown in the Figures.

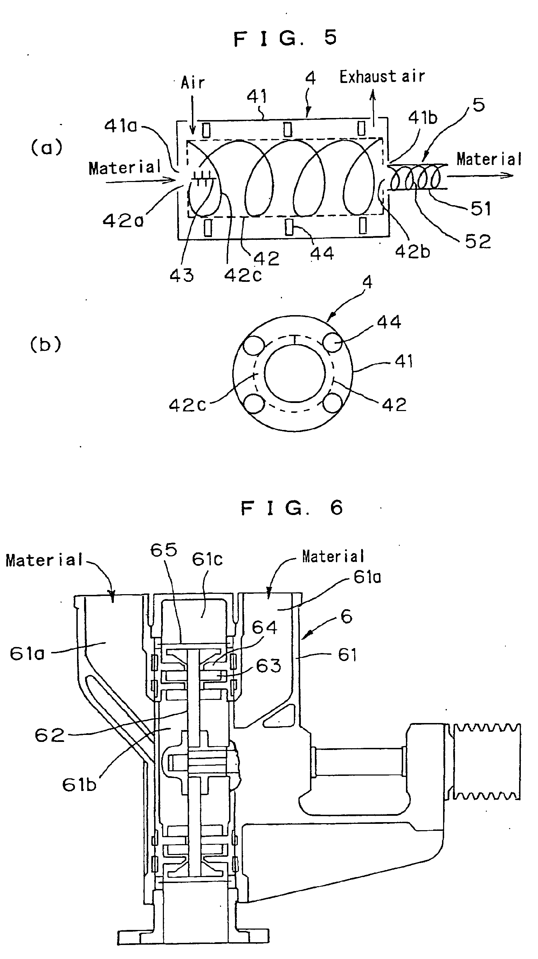

As shown in Figure 5, the drier 4 is provided with a cylindrical outer shell 41 extending horizontally. The cylindrical outer shell 41 is provided with an inlet port 41a and an outlet port 41b at its opposite ends. A cylindrical inner shell 42 made of mesh is disposed in the cylindrical outer shell 41. The cylindrical inner shell 42 is provided with an inlet port 42a and an outlet port 42b opposite the inlet port 41a and the outlet port 41b of the outer shell 41. The cylindrical inner shell 42 is provided with a spiral protrusion 42c on its inner surface. A shaft 43 provided with a plurality of agitating arms opposite the inlet port 42a is disposed in the cylindrical inner shell 42. The shaft 43 extends coaxially with the cylindrical inner shell 42. The shaft 43 is fixed to the cylindrical inner shell 42 through a support member not shown in the Figures. A plurality of rollers 44 are disposed between the cylindrical outer shell 41 and the cylindrical inner shell 42 to support the inner shell. Specific ones among the supporting rollers 44 are driving rollers driven by a motor not shown in the Figures, and the other rollers are driven rollers.

Plate-shaped plant fiber material is carried by the belt conveyer not shown in Figures into the cylindrical inner shall 42 through the inlet port 41a of the cylindrical outer shell and the inlet port 42a of the cylindrical inner shell. The specific driving rollers among the rollers 44 for supporting the inner shell rotate to rotate the cylindrical inner shell 42. The shaft 43 rotates together with the cylindrical inner shell 42, the agitating arms provided to the shaft 43 rotate, and the plate-shaped plant fiber material is loosened when it is carried into the cylindrical inner shell 42. The loosened plant fiber material is carried to the outlet port 42b by the rotating spiral protrusion 42c.

Air heated to 250°C is supplied to the cylindrical outer shell 41 through an opening provided in the cylindrical outer shell 41 at its portion near the inlet port 41a. The air temperature becomes 150°C and the air is discharged from the cylindrical outer shell 41 through an opening provided in the cylindrical outer shell 41 at its portion near the outlet port 41b. The heated air flows into the cylindrical inner shell 42 made of mesh, and dries the plant fiber material to rapidly reduce its water content from about 35 weight % to about 10 weight %.

The dried plant fiber material with a water content of about 10 weight % is discharged from the drier 4 through the outlet port 42b of the cylindrical inner shell and the outlet port 41b of the cylindrical outer shell 41. The plant fiber material is then carried to a crusher 6 through a carrying pipe 5 disposed opposite the outlet port 41b of the cylindrical outer shell 41.

As shown in Figure 5, the carrying pipe 5 is provided with a pipe body 51, a spiral protrusion 52 formed on the inner surface of the pipe body 51 and a driving machine for rotating the pipe body 51. The driving machine is not shown in the Figures. The pipe body 51 rotates, the spiral protrusion 52 rotates together with the pipe body 51, and the plant fiber material is carried in the pipe body 51, while being excluded from the outer air. The dry plant fiber material with a water content of about 10 weight % is protected against humidification when it is carried because it is excluded from the outer air.

As shown in Figure 6, the crusher 6 is provided with a case 61 having a hopper 61a, a crushing chamber 61b and a powder discharging chamber 61c. A rotating disk 62 is disposed in the crushing chamber 61b. The rotating disk 62 is provided with a plurality of impact pins 63 at its opposite surfaces. The impact pins 63 are disposed at the outer peripheral portion of the rotating disk 62 and aligned on a circle. A plurality of impact pins 64 are fixed to the enclosure of the crushing chamber 61b. The impact pins 64 are aligned on a circle to mesh with the plurality of impact pins 63. An annular mesh 65 is disposed radially outside the rotating disk 62. The rotating disk is driven by a motor not shown in the Figures.

The plant fiber material carried by the carrying pipe 5 is put in the hopper 61a and carried to the center portion of the crushing chamber 61b. The rotating disk 62 rotates to apply friction force to the plant fiber material, thereby rotating it. Centrifugal force caused by the rotation moves the plant fiber material radially outward. The plant fiber material reaches the outer peripheral portion of the rotating disk 62. The impact pins 63 and 64 apply impact force to the plant fiber material to crush it, thereby generating plant fiber material powder. The impact force applied to the plant fiber material generates heat. The heat dehydrates the plant fiber material powder rapidly because the ratio of surface area to volume, i.e., (surface area/volume) of the plant fiber material powder is large. Therefore, the water content of the plant fiber material powder decreases to 4 to 10 weight % in a short time. The plant fiber material powder with a water content of 4 to 10 weight % enters into the powder discharging chamber 61c through the annular mesh 65, and is then carried to a classifier 7 by the carrying pipe 5.

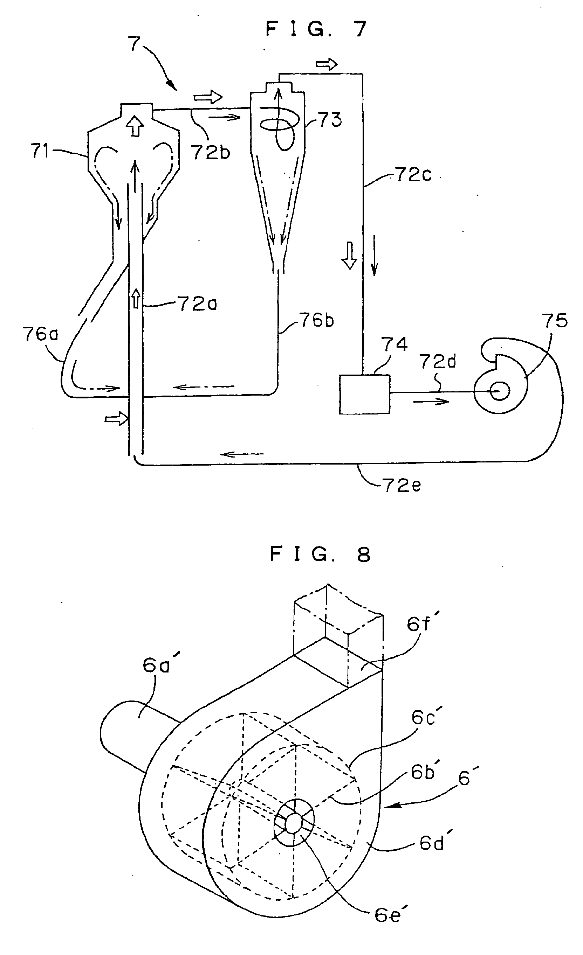

As shown in Figure 7, the classifier 7 is provided with a hopper 71. An upright blast pipe 72a extends into the hopper 71 at its upper end portion through the slant bottom plate of the hopper 71. A cyclone dust collector 73 is disposed adjacent the hopper 71. A blast pipe 72b extending from the top of the hopper 71 connects with the upper part of the cyclone dust collector 73 tangentially. A blast pipe 72c extending from the top of the cyclone dust collector 73 connects with a filter 74. A blast pipe 72d extending from the filter 74 connects with the inlet port of a centrifugal air blower 75. A blast pipe 72e extending from the outlet port of the centrifugal air blower 75 connects with the lower end of the blast pipe 72a. A pipe 76a extending from the lower end of the hopper 71 connects with the lower part of the blast pipe 72a. A pipe 76b extending from the lower end of the cyclone dust collector 73 connects with the lower part of the blast pipe 72a.

As indicated by continuous line arrows in Figure 7, the air blowing out of the centrifugal air blower 75 flows through the blast pipe 72e into the lower end of the blast pipe 72a, then flows upward through the blast pipe 72a into the hopper 71. The air flows upward in the hopper 71, then flows into the blast pipe 72b from the top of the hopper 71. The air flows through the blast pipe 72b into the upper portion of the cyclone dust collector 73 tangentially. The air flows spirally in the cyclone dust collector 73, then flows into the blast pipe 72c from the top of the cyclone dust collector 73. The air flows through the blast pipe 72c into the filter 74, then comes back to the centrifugal air blower 75 through the blast pipe 72d.

As indicated by blank arrows in Figure 7, the plant fiber material powder is carried through the carrying pipe 5 into the lower part of the blast pipe 72a, flows up in the blast pipe 72a accompanied by the ascending air current in the blast pipe 72a, and flows into the hopper 71. In the hopper 71, the plant fiber material powder receives less amount of buoyancy from the air flow than in the blast pipe because the air flow speed decreases in the hopper 71. Therefore, as indicated by phantom line arrows in Figure 7, large size particles in the plant fiber material power fall toward the lower end of the hopper 71, then return to the lower part of the blast pipe 72a through the pipe 76a. Fine particles in the plant fiber material powder flow into the blast pipe 72b from the top of the hopper 71, then flow into the cyclone dust collector 73 through the blast pipe 72b as indicated by blank arrows in Figure 7.

The fine particles in the plant fiber material powder flow spirally in the cyclone dust collector 73 accompanied by the airflow. Centrifugal force caused by the spiral movement forces middle sized particles in the plant fiber material powder to collide against the side wall of the cyclone dust collector 73, thereby allowing them to fall along the side wall as indicated by phantom line arrows in Figure 7. The middle sized particles flow into the pipe 76b from the lower end of the cyclone dust collector 73, then return to the lower part of the blast pipe 72a through the pipe 76b. As indicated by blank arrows in Figure 7, the fine particles in the plant fiber material powder flow into the blast pipe 72c from the top of the cyclone dust collector 73, then flow into the filter 74 through the blast pipe 72c.

The plant fiber material powder is captured by the filter 74. Therefore, only air returns to the centrifugal air blower 75 through the blast pipe 72d.

Plant fiber powder with 60 to 200 mesh particle size only is captured efficiently by the filter 74 because the plant fiber powder is classified in two steps, once by hopper 71 and once by the cyclone dust collector 73, with the speed of the ascending air current, the ascending distance to the top of the hopper 71, the specifications of the cyclone dust collector 73, etc. being set at suitable conditions. The plant fiber powder with a water content of 4 to 10 weight % is classified in an environment excluded from outside air. Therefore, the plant fiber powder is protected from moisture absorption in the classification process. The plant fiber material powder with 60 to 200 mesh particle size and a water content of 4 to 10 weight % captured by the filter 74 is carried to a mixer 8 by the carrying pipe 5.

In the mixer 8, the plant fiber material powder with a water content of 4 to 10 weight %, a mixture of starch powder and gummy matter powder, and water are mixed with each other, or 2 to 17 weight parts of the plant fiber material powder with a water content of 4 to 10 weight % is mixed with 1 weight part of plant binder powder, then 3 to 9 weight parts of the mixture of the plant fiber powder and the plant binder powder is mixed with 1 weight part of water. Thus, a plant fiber molding material suitable for injection molding is formed.

The plant fiber molding material does not need pre-forming such as granulation for enhancing ease of carriage by the screw of the injection molding machine because it is imparted with suitable viscosity and flowability and can be reliably carried by the screw. Therefore, the plant fiber molding material, which is a powder, is carried by the carrying pipe 5 to be put into the injection molding machine 9 as it is, thereby being brought to the final injection molding process to become plant fiber material moldings. The plant fiber molding material is a moisturized powder and has no flowability until it is injected from the nozzle into the mold. However, the plant fiber molding material obtains flowability when it is injected and fills up the mold.

The temperature of the plant fiber molding material when it is injected from the injection nozzle is controlled 60 to 130°C, more preferably 70 to 110°C. When the plant fiber molding material is molded at a temperature lower than 60°C, the starch is not gelatinized so that the plant fiber molding material lacks flowability, thereby causing lack of filling. In the worst case, the plant fiber molding material is not discharged from the injection nozzle of the injection molding machine 9. When the plant fiber molding material is molded at a temperature higher than 130°C, the volume of steam blown out of the nozzle of the injection molding machine 9 increases to cause filling up of end portions of the cavity of the mold with gas, thereby causing lack of filling. When the plant fiber molding material is molded at a temperature of 70 to 110°C, the required quantity of the molding material is reliably injected from the injection nozzle of the injection molding machine 9, and the end portions of the cavity of the mold are not filled up with gas. Thus, the mold is reliably prevented from lack of filling.

The molding temperature of 60 to 130°C has an advantage in that the energy consumption is less than in conventional plastic molding with a molding temperature of 200 to 250°C.

The plant fiber molding material is directly put into the injection molding machine 9 without being passed through a pre-forming process such as granulation process. Thus pre-forming cost, such as granulation cost is saved, while such cost cannot be avoided in conventional plastic molding.

The plant fiber material dehydrated by the wringer 3 to a water content of about 35 weight % may be carried directly to the crusher 6 without passing through the drier 4 to be crushed and dried. A plant fiber material powder with a water content of 10 to 20 weight % is obtained.

The plant fiber material with a water content of 40 to 50 weight % may be carried from the hopper 1 directly to the crusher 6 without passing through the steam drier 2, wringer 3 and the drier 4 to be crushed and dried. An unsterilized plant fiber material powder with a water content of 10 to 20 weight % is obtained. When plant fiber material moldings which do not need sterilization are produced, the unsterilized plant fiber material powder with a water content of 10 to 20 weight % can be used.

A plant fiber material powder with 60 to 200 mesh particle size can be efficiently classified from a plant fiber material powder with a water content of 10 to 20 weight % by using the classifier 7 provided with the hopper 71, the cyclone dust collector 73 and the filter 74. When the water content of the plant fiber material powder exceeds 20 weight %, the efficiency of the classification by the hopper 71 and the cyclone dust collector 73 declines because of the weight increase of the particles of the powder. Thus, mass production of the plant fiber material moldings is obstructed.

Another type of crusher 6' is shown in Figure 8. The crusher 6' is provided with a motor 6a' , a plurality of radially directed blades 6b' provided with cutting edges at their tips and fixed to the outlet shaft of the motor 6a' at their roots circumferentially distanced from each other, a cylindrical body 6c' made of mesh and disposed slightly distanced from the tips of the radially directed blades 6b' to surround the blades 6b' , and a casing 6d' for receiving the cylindrical body 6c'. The casing 6d' is provided with an inlet port 6e' and an outlet port 6f'. A plurality of crusher 6' are connected to each other in tandem. The size of the pores of the mesh forming the cylindrical body 6c' are reduced successively from the first stage crusher 6' to the last stage crusher 6'.

The motor 6a' starts to rotate the radially directed blades 6b', thereby forming radially outwardly directed air flow in the cylindrical body 6c'. The plant fiber material naturally dried to a water content of 40 to 50 weight % is put in the first stage crusher 6' through the inlet port 6e'. The plant fiber material is taken by the air flow to move toward the tips of the radially directed blades 6b' , sheared by cutting edges formed on the tips of the radially directed blades 6b', and forced into small pores of the mesh forming the cylindrical body 6c' to be ground down and sheared. The ground down and sheared plant fiber material is taken by the air to flow out the first stage crusher 6' through the outlet port 6f ' , then flows into the next stage crusher 6'. The grinding down of the plant fiber material is repeated successively to the last stage crusher 6' , while the size of the pores of the mesh forming the cylindrical body 6c' are reduced successively. Thus, a plant fiber material powder with 60 to 200 mesh particle size is obtained. The water content of the plant fiber material powder falls to 4 to 20 weight % due to heat generated when the plant fiber material is ground down and sheared and the exposure of the material to the air flow.

Any type of crusher other than the crushers 6 and 6' may be used. The plant fiber material becomes dry due to heat generated when the material is crushed.

### Embodiment 1: Production of a sphere

A plant fiber material powder with 60 to 200 mesh particle size and a water content of 8 weight % was made from thinnings of cedar using the machines from the hopper 1 to the classifier 7. 58 weight parts of the plant fiber material powder was mixed with 17 weight parts of plant binder powder uniformly. The mixture was uniformly added with 25 weight parts of water to be moisturized, then mixed by the mixer 8. Thus, a plant fiber molding material was obtained. A mixture of 97 weight % of corn starch, 2 weight % of xanthan gum and 1 weight % of tamarind seed gum was used as the plant binder powder.

The plant fiber molding material was put in the injection cylinder of an injection molding machine through the hopper of the machine, and injected in a mold in the ordinary way. Thus, a sphere having a diameter of 50mm and weighing 72g was obtained. The injection pressure was set at 103 MPa, the fastening force of the mold was set at 1,700KN, and the pull out mold time was set at 75 seconds.

The sphere was buried in soil. It had already been degraded and become invisible after 12 weeks in the soil.

### Embodiment 2: Production of a bowl

A plant fiber material powder with 60 to 200 mesh particle size and a water content of 5 weight % was made from bamboo using the machines from the hopper 1 to the classifier 7. 63 weight parts of the plant fiber material powder was mixed with 20 weight parts of plant binder powder uniformly. The mixture was uniformly added with 17 weight parts of water to be moisturized, then mixed by the mixer 8. Thus, a plant fiber molding material was obtained. A mixture of 98 weight % of corn starch and 2 weight % of xanthan gum was used as the plant binder powder.

The plant fiber molding material was put in the injection cylinder of an injection molding machine through the hopper of the machine, and injected in a mold in the ordinary way. Thus, a bowl weighing 65g was obtained. The injection pressure was set at 83 MPa, the fastening force of the mold was set at 1,250KN, and the pull out mold time was set at 45 seconds.

The bowl was buried in soil. It had already been degraded and become invisible after 3 weeks in the soil.

### Embodiment 3: Production of a pendant top

A plant fiber material powder with 60 to 200 mesh particle size and a water content of 7 weight % was made from grass using the machines from the hopper 1 to the classifier 7. 73 weight parts of the plant fiber material powder was mixed with 14 weight parts of plant binder powder uniformly. The mixture was uniformly added with 13 weight parts of water to be moisturized, then mixed by the mixer 8. Thus, a plant fiber molding material was obtained. A mixture of 98 weight % of potato starch, 1 weight % of xanthan gum and 1 weight % of tamarind seed gum was used as the plant binder powder.

The plant fiber molding material was put in the injection cylinder of an injection molding machine through the hopper of the machine, and injected in a star-shaped mold for producing five moldings in the ordinary way. Thus, a star-shaped pendant top weighing 12g was obtained. The injection pressure was set at 83 MPa, the fastening force of the mold was set at 950KN, and the pull out mold time was set at 20 second.

The pendant top was buried in soil. It had already been degraded and become invisible after 2 weeks in the soil.

### Embodiment 4: Production of a pot

A mixture of cedar sawdust and white cedar shavings with a water content of 40 to 50 weight % was put in the hopper 1, then carried to the crusher 6 directly without passing through the steam drier 2, wringer 3 and drier 4, and crushed and dried. Thus, unsterilized plant fiber material powder with a water content of 10 to 20 weight % was obtained. A plant fiber material powder with 60 to 200 mesh particle size and a water content of 13 weight % was made from the unsterilized plant fiber material powder using the classifier 7 having the hopper 71, the cyclone dust collector 73 and the filter 74. 69 weight parts of the plant fiber material powder was mixed with 11 weight parts of plant binder powder uniformly. The mixture was uniformly added with 20 weight parts of water to be moisturized, then mixed by the mixer 8. Thus, a plant fiber molding material was obtained. A mixture of 91 weight % of wheat starch, 3 weight % of xanthan gum and 6 weight % of tamarind seed gum was used as the plant binder powder.

The plant fiber molding material was put in the injection cylinder of an injection molding machine through the hopper of the machine, and injected in a mold in the ordinary way. Thus, a pot weighing 162g (143mm in depth and 127mm in diameter) was obtained. The injection pressure was set at 160 MPa, the fastening force of the mold was set at 2,000KN, and the pull out mold time was set at 90 seconds.

The pot was buried in soil. It had already been degraded and become invisible after 10 weeks in the soil.

### Embodiment 5: Production of a pot

A mixture of cedar sawdust and white cedar shavings with a water content of 40 to 50 weight % was put in the hopper 1, then carried to the crusher 6 directly without passing through the steam drier 2, wringer 3 and drier 4, and crushed and dried. Thus, unsterilized plant fiber material powder with a water content of 10 to 20 weight % was obtained. A plant fiber material powder with 60 to 200 mesh particle size and a water content of 13 weight % was made from the unsterilized plant fiber material powder using the classifier 7 having the hopper 71, the cyclone dust collector 73 and the filter 74. 65 weight parts of the plant fiber material powder was mixed with 12 weight parts of plant binder powder uniformly. The mixture was uniformly added with 23 weight parts of water to be moisturized, then mixed by the mixer 8. Thus, a plant fiber molding material was obtained. Only potato starch was used as the plant binder powder.

The plant fiber molding material was put in the injection cylinder of an injection molding machine through the hopper of the machine, and injected in a mold in the ordinary way. Thus, a pot weighing 168g (143mm in depth and 127mm in diameter) was obtained. The injection pressure was set at 160 MPa, the fastening force of the mold was set at 2,000KN, and the pull out mold time was set at 90 seconds.

The pot was buried in soil. It had already been degraded and become invisible after 10 weeks in the soil.

### Embodiment 6: Production of a board

A mixture of cedar sawdust and white cedar shavings with a water content of 40 to 50 weight % was put in the hopper 1, then carried to the crusher 6 directly without passing through the steam drier 2, wringer 3 and drier 4, and crushed and dried. Thus, unsterilized plant fiber material powder with a water content of 10 to 20 weight % was obtained. A plant fiber material powder with 60 to 200 mesh particle size and a water content of 8 weight % was made from the unsterilized plant fiber material powder using the classifier 7 having the hopper 71, the cyclone dust collector 73 and the filter 74. 62 weight parts of the plant fiber material powder was mixed with 15 weight parts of plant binder powder uniformly. The mixture was uniformly added with 23 weight parts of water to be moisturized, then mixed by the mixer 8. Thus, plant fiber molding material was obtained. A mixture of 94 weight % of tapioca starch, 2 weight % of xanthan gum and 4 weight % of tamarind seed gum was used as the plant binder powder.

The plant fiber molding material was put in the heating cylinder of an extrusion molding machine through the raw material hopper of the machine, and extruded from a board molding die plate connected to the front end of the heating cylinder in the ordinary way. Thus, a board weighing 280g (8mm in thickness, 60mm in width and 500mm in length) was obtained

The board was buried in soil. It had already been degraded and become invisible after 2 weeks in the soil.

### [INDUSTRIAL APPLICABILITY OF THE INVENTION]

The method for producing biodegradable fiber material moldings in accordance with the present invention is suitable for producing biodegradable fiber material moldings which can be degraded in soil in a short time, do not place a heavy load on environment, and can be mass-produced inexpensively

## Claims

1. A method for producing biodegradable fiber material moldings comprising steps of mixing plant fiber powder with plant binder powder, which is a mixture of starch powder and gummy matter powder, mixing the mixture of the plant fiber powder and the plant binder powder with water to form plant fiber molding material, and molding the plant fiber molding material.

2. A method for producing biodegradable fiber material moldings comprising steps of mixing 2 to 17 weight parts of plant fiber powder with 1 weight part of plant binder powder, mixing 3 to 9 weight parts of the mixture of the plant fiber powder and the plant binder powder with 1 weight part of water to form plant fiber molding material, and molding the plant fiber molding material.

3. A method for producing biodegradable fiber material moldings of claim 2, wherein the plant binder powder is starch powder.

4. A method for producing biodegradable fiber material moldings of claim 2 or 3, wherein the plant binder powder is a mixture of starch powder and gummy matter powder.

5. A method for producing biodegradable fiber material moldings of claim 1 or 4, wherein the gummy matter is water soluble polysaccharide.

6. A method for producing biodegradable fiber material moldings of claim 5, wherein the water soluble polysaccharide is one or more selected from the group consisting of xanthan gum, tamarind seed gum, gellan gum, carrageenan, pullulan, guar gum, locust bean gum, tara gum, pectin, alginic acid, and agar.

7. A method for producing biodegradable fiber material moldings of claim 5, wherein the water soluble polysaccharide is one or two selected from the group consisting of xanthan gum and tamarind seed gum.

8. A method for producing biodegradable fiber material moldings of anyone of claims 1 to 7, wherein particle size of the plant fiber material powder is 60 to 200 mesh.

9. A method for producing biodegradable fiber material moldings of claim 8, wherein the water content of the plant fiber material powder is 4 to 20 weight %.

10. A method for producing biodegradable fiber material moldings of claim 9, wherein plant fiber material with a water content of 40 to 50 weight % is washed and sterilized by 150 to 180°C steam, pressurized and dehydrated, heated and dried, and impacted on and crushed to obtain plant fiber powder with a water content of 4 to 10 weight %, whereafter the plant fiber powder is dispersed into an ascendant air current to be classified, and led into a cyclone dust collector to be classified, in an environment excluded from outside air, to obtain plant fiber powder with 60 to 200 mesh particle size and a water content of 4 to 10 weight %.

11. A method for producing biodegradable fiber material moldings of claim 9, wherein plant fiber material with a water content of 40 to 50 weight % is washed and sterilized by 150 to 180°C steam, pressurized and dehydrated, and impacted on and crushed to obtain plant fiber powder with a water content of 10 to 20 weight %, whereafter the plant fiber powder is dispersed into an ascendant air current to be classified, and led into a cyclone dust collector to be classified, in an environment excluded from outside air, to obtain plant fiber powder with 60 to 200 mesh particle size and a water content of 10 to 20 weight %.

12. A method for producing biodegradable fiber material moldings of claim 9, wherein plant fiber material with a water content of 40 to 50 weight % is impacted on and crushed to obtain plant fiber powder with a water content of 10 to 20 weight %, whereafter the plant fiber powder is dispersed into an ascendant air current to be classified, and led into a cyclone dust collector to be classified, in an environment excluded from outside air, to obtain plant fiber powder with 60 to 200 mesh particle size and a water content of 10 to 20 weight %.

13. A method for producing biodegradable fiber material moldings of claim 9, wherein plant fiber material with a water content of 40 to 50 weight % is ground down to obtain plant fiber powder with 60 to 200 mesh particle size and a water content of 4 to 20 weight %.

14. A method for producing biodegradable fiber material moldings of anyone of claims 1 to 13, wherein the plant fiber molding material is molded at a temperature of 60 to 130 °C.

15. A method for producing biodegradable fiber material moldings of anyone of claims 1 to 14, wherein the plant fiber molding material is brought to final molding process without passing through a pre-forming process.

16. Biodegradable fiber molding material comprising plant fiber powder, plant binder powder, which is a mixture of starch powder and gummy matter powder, and water, wherein the plant fiber powder, the plant binder powder and the water are mixed with each other.

17. Biodegradable fiber molding material comprising plant fiber powder, plant binder powder and water, wherein the plant fiber powder, the plant binder powder and the water are mixed with each other, and wherein the weight of the plant binder powder is 1/7 to 1/2 of the weight of the plant fiber powder, and the weight of the mixed water is 10 to 25 % of the total weight of the mixture of the plant fiber powder, the plant binder powder and the water.

18. Biodegradable fiber molding material of claim 17, wherein the plant binder powder is starch powder.

19. Biodegradable fiber molding material of claim 17 or 18, wherein the plant binder powder is a mixture of starch powder and gummy matter powder.

20. Biodegradable fiber molding material of claim 16 or 19, wherein the gummy matter is water soluble polysaccharide.

21. Biodegradable fiber molding material of claim 20, wherein the water soluble polysaccharide is one or more selected from the group consisting of xanthan gum, tamarind seed gum, gellan gum, carrageenan, pullulan, guar gum, locust bean gum, tara gum, pectin, alginic acid, and agar.

22. Biodegradable fiber molding material of claim 20, wherein the water soluble polysaccharide is one or two selected from the group consisting of xanthan gum and tamarind seed gum.

23. Biodegradable fiber molding material of anyone of claims 16 to 22, wherein particle size of the plant fiber material powder is 60 to 200 mesh.

24. Biodegradable fiber molding material of claim 23, wherein the water content of the plant fiber material powder is 4 to 20 weight %.
